# EUROPÄISCHE PATENTANMELDUNG

(11) **EP 4 545 913 A1**
(43) Veröffentlichungstag der Anmeldung: **30.04.2025**
(21) Anmeldenummer: 24207133.0
(22) Anmeldetag: 17.10.2024
(51) Int. Cl.: G01F 1/56, G01F 15/00, G01F 15/12, G01F 15/14

(54) **MESSROHR UND MESSGERÄT MIT EINEM SOLCHEN MESSROHR**

(30) Priorität: 27.10.2023 DE 102023129779
(71) Anmelder: ifm electronic gmbh, 45128 Essen (DE)
(72) Erfinder: Halbinger, Lorenz, 88353 Kißlegg (DE)
(74) Vertreter: Ifm Patentabteilung

(57) **Zusammenfassung**

Die Erfindung betrifft ein Messrohr (1), insbesondere für ein Messgerät (2) der Prozess- und Automatisierungstechnik, wobei das Messrohr (1) zum Führen eines Messmediums (3) geeignet ist. Dabei weist das Messrohr (1) an der dem Messmedium (3) zugewandten Seite eine Vorrichtung (10) auf, die geeignet ist, das Ablagern von Substanzen aus dem Messmedium (3) zu verhindern oder zumindest zu erschweren, wobei diese Vorrichtung (10) als wenigstens eine nach Innen gerichtete spiralförmig verlaufende Erhebung ausgebildet ist.

## Beschreibung

Die Erfindung betrifft eine Messrohr, insbesondere für ein Messgerät der Prozess- und Automatisierungstechnik gemäß dem Oberbegriff des Anspruchs 1 sowie ein Messgerät mit einem solchen Messrohr.

In der Automatisierungs- und Prozesstechnik kommen häufig Sensoren bzw. Messgeräte zum Einsatz, die den erfassten Messwert - z.B. Druck, Temperatur, Durchfluss, aber auch Abstand oder Vibration - in ein diesen Messwert repräsentierendes Ausgangssignal in Form eines analogen oder digitalen Strom- oder Spannungssignals umwandeln und dieses Signal an ihrem Kabel- oder Steckeranschluss, aber teilweise auch drahtlos zur weiteren Verarbeitung einer übergeordneten Steuereinheit anbieten, bspw. einer SPS.

Ein typisches Messgerät besteht zunächst aus einem Sensorelement, auch als Messwertaufnehmer bezeichnet, das der Erfassung und Umwandlung einer physikalischen Messgröße eines Prozesswerts in ein Messsignal dient. Des Weiteren ist eine Auswerteeinheit vorgesehen, die häufig als Mikrocontroller ausgeführt ist und in der die vom Sensorelement generierten Messsignale aufbereitet, d.h. verstärkt, und zumeist auch schon verarbeitet werden. Die Auswerteinheit ist zumeist ausgangsseitig sowohl mit einer Anzeigeeinheit als auch mit einer Kommunikationsschnittstelle verbunden, über die die aufbereiteten Messsignale an die bereits erwähnte Steuereinheit übertragen werden können. Auf der Anzeigeeinheit werden die aktuellen Messwerte angezeigt. Des Weiteren dient die Anzeigeeinheit häufig auch zum Einrichten und Parametrieren des Messgeräts. Hierzu verfügt das Messgerät zusätzlich über entsprechende Eingabemöglichkeiten.

Eine Vielzahl eingangs genannter Messgeräte, insbesondere Durchflussmessgeräte, erfassen den Messwert in einem Messrohr, in dem sich das Messmedium befindet und welches bspw. Teil einer verfahrenstechnischen Anlage sein kann.

Abhängig vom Messmedium und bei niedrigen Fließgeschwindigkeiten können Messrohre von Ablagerungen betroffen sein. Insbesondere bei Hygieneanwendungen werden aufwendige Reinigungsprozeduren - CIP (Cleaning in Place) - durchgeführt, um eine richtlinienkonforme Reinigung sämtlicher mit dem Messmedium in Berührung kommenden Teile sicherzustellen. Entsprechende Richtlinien in der Lebensmittelindustrie werden bspw. von der European Hygienic Engineering & Design Group (EHEDG) definiert. Insofern hat sich bei den Betreibern derartiger Anlagen ein Bedarf ergeben, durch vorbeugende Maßnahmen den durch die Reinigungsverfahren entstehenden Aufwand zu verringern, indem Ablagerungen durch das Messmedium weitgehend vermieden werden oder einfacher und schneller abgereinigt werden können.

Aus der DE 10 2007 045 473 A1 ist bekannt, die Innenseite des Messrohrs mit strömungsparallelen und -orthogonalen Riefen zu versehen, um das Festsetzen von biologischen Organismen an der Oberfläche zu verhindern. Die Umsetzung erscheint aber sehr aufwendig und daher wenig praxistauglich zu sein.

Aufgabe der Erfindung ist es daher, ein Messrohr für ein Messgerät der Prozess- und Automatisierungstechnik vorzuschlagen, in dem auf einfache Weise Ablagerungen durch das Messmedium vermieden bzw. bei deren Auftreten schnell, effektiv und wirkungsvoll abgereinigt werden können.

Die Aufgabe wird erfindungsgemäß durch ein Messrohr mit den Merkmalen des Anspruchs 1 gelöst sowie durch ein Messgerät nach Anspruch 9. Vorteilhafte Ausgestaltungen der Erfindung sind in den Unteransprüchen angegeben.

Im Gegensatz zur DE 10 2007 045 473 A1 lag der Erfindung nicht die Veränderung der Oberflächenbeschaffenheit zu Grunde, um Ablagerungen zu vermeiden, sondern eine Oberflächenstruktur zu schaffen, die das durchströmende Messmedium in der Nähe der Rohrwandung in Mikro-Verwirbelungen bzw. Mikro-Turbulenzen versetzt und so eine Umgebung schafft, in der das Ablagern von Substanzen begünstigende Situationen nicht mehr vorhanden sind.

Indem das Messrohr an der dem Messmedium zugewandten Seite in Längsrichtung wenigstens eine nach Innen gerichtete spiralförmig verlaufende Erhebung aufweist, wird das durchströmende Medium insbesondere im Grenzschicht-Bereich des Messrohrs in eine Drallbewegung versetzt. Damit entstehen neben den sich in Längsrichtung wälzenden Mikrowirbeln auch noch in Rotationsrichtung erzwungene Mikrowirbel, die an der Innenseite des Messrohrs entsprechende Anpress- und Scherkräfte auf die (Mikro-)Beläge "aufzwingen" und somit die Reinigung optimieren bzw. bereits für einen gewissen Selbstreinigungseffekt sorgen.

Der spiralförmige Verlauf kann dabei zur Beeinflussung des Verwirbelungseffekts durchgehend oder auch unterbrochen ausgeführt sein und weist vorzugsweise wenigstens eine Umdrehung von einem Zehntel auf.

In einer Weiterbildung der Erfindung ist vorgesehen, dass das Messrohr mehrere spiralförmig verlaufende Erhebungen aufweist, die jeweils parallel zueinander verlaufen. Je nach Art und Zusammensetzung des Messmediums kann die Anzahl der Erhebungen angepasst werden.

Eine weitere vorteilhafte Weiterbildung sieht vor, dass die spiralförmig verlaufende Erhebung(en) wenigstens eine Unterbrechung aufweist bzw. aufweisen, um den Verwirbelungseffekt zu beeinflussen oder aus Fertigungsgründen.

In einer weiteren vorteilhaften Weiterbildung der Erfindung ist vorgesehen, dass das Messrohr aus einem nicht leitenden Werkstoff besteht, insbesondere aus einem thermoplastischen, duroplastischen oder elastomeren Kunststoff. Bspw. kann das Messrohr innenseitig mit einem Liner aus PFA oder PTFE ausgekleidet bzw. beschichtet ist. Denkbar ist aber auch Polyetheretherketon (PEEK).

Ein weiterer Vorteil der Erfindung besteht darin, dass nur bestimmte Bereiche innerhalb des Messrohr partiell oder bei entsprechenden Einbauten durch diese Mikro-Verwirbelungen einer verbesserten Reinigungswirkung ausgesetzt sind.

Besonders vorteilhaft ist es, wenn das Messrohr hygienischen Ansprüchen genügt. Dabei sind neben Materialauswahl und Oberflächenbeschaffenheit insbesondere die Merkmale Totraum- und Spaltfreiheit gemeint, so dass gewährleistet werden kann, dass sich keinerlei Substanzen ablagern können.

Ein weiterer Aspekt der Erfindung betrifft ein Messgerät der Prozess- und Automatisierungstechnik mit einem Messrohr, wobei das Messrohr wie zuvor beschrieben ausgebildet ist. Bevorzugt ist das Messgerät als Durchflussmessgerät, insbesondere als magnetisch-induktives Durchflussmessgerät ausgeführt. Vorteilhafterweise genügt dabei das gesamte Messgerät den zuvor erwähnten hygienischen Ansprüchen.

Nachfolgend wird die Erfindung anhand von Ausführungsbeispielen unter Bezugnahme auf die Zeichnungen näher erläutert.

Es zeigen schematisch:
- Figur 1: Schnittbild eines erfindungsgemäßen Messrohrs,
- Figur 2: Querschnitt eines erfindungsgemäßen Messrohrs und
- Figur 3a/3b: Darstellungen der erfindungsgemäßen Erhebungen.

Bei der nachfolgenden Beschreibung der bevorzugten Ausführungsformen bezeichnen gleiche Bezugszeichen gleiche oder vergleichbare Komponenten.

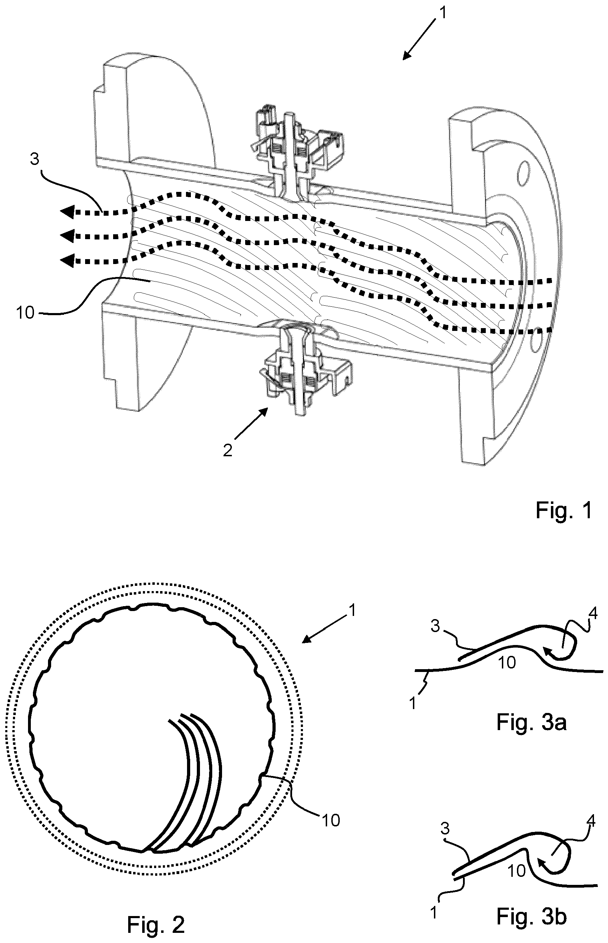

In Figur 1 ist das Schnittbild eines erfindungsgemäßen Messrohrs 1 abgebildet. Vorliegend ist dieses Messrohr Teil eines Messgerät 2 der Prozess- und Automatisierungstechnik, was bspw. ein Strömungs- bzw. Durchflussmessgerät sein kann. Das Messrohr 1 ist zum Führen eines Messmediums 4 vorgesehen. Es besteht typischerweise aus Edelstahl und ist an seiner Innenseite mit einem nicht leitenden Werkstoff ausgekleidet, bspw. mit einem thermoplastischen, duroplastischen oder elastomeren Kunststoff. Angedeutet sind in Längsrichtung des Messrohrs 1 zur Messrohrinnenseite gerichtete spiralförmig verlaufende Erhebungen 10.

In Figur 2 ist schematisch ein Querschnitt des erfindungsgemäßen Messrohrs 1 abgebildet. Zu erkennen sind mehrere zur Messrohrinnenseite gerichtete spiralförmig verlaufende Erhebungen 10. Aus Darstellungsgründen ist nur im unteren Bereich des Messrohrs 1 der spiralförmige Verlauf der Erhebungen 10 angedeutet.

Die Figuren 3a und 3b zeigen beispielhafte Ausführungen der erfindungsgemäßen Erhebungen 10. Während Fig. 3a einen beidseitig weitgehend harmonischen Verlauf der Erhebung 10 darstellt, ist in Fig. 3b eine im Querschnitt gesehen wellenförmige Kontur der Erhebung 10 abgebildet. Beiden Ausführen gemein ist, dass sich in Strömungsrichtung gesehen nach der Erhebung 10 eine Verwirbelungen 4 des Messmediums 3 ausbildet. Da die Erhebungen 10 vergleichsweise klein sind, d.h. vorzugsweise im Bereich 2-5 mm, und sich entsprechend auch nur eine geringe Verwirbelung ausbildet, wird diese Verwirbelung 4 als Mikro-Verwirbelung bezeichnet.

Die Erhebungen 10 bewegen sich in der Höhe im 1-5%-Bereich des Durchmessers, während die Breite sich im 5-10%-Bereich des Durchmessers bewegen.

Durch diese Erhebungen 10 und die damit geschaffene allgemeine Oberflächenstruktur der Messrohrinnenseite wird das durchströmende Medium 3 insbesondere im Grenzschicht-Bereich des Messrohrs 1 in eine Drallbewegung versetzt. Die an der Messrohrinnenseite entstehenden Mikro-Verwirbelungen 4 bzw. Mikro-Turbulenzen schaffen somit eine Umgebung, die das Ablagern von Substanzen aus dem Messmedium verhindert, zumindest aber erschwert, so dass sie durch regelmäßige Reinigungsvorgänge leicht zu beseitigen sind. Auch der Reinigungsvorgang an sich ist bei den dann meist höheren Strömungsgeschwindigkeiten effektiver und schneller.

### Bezugszeichenliste

- 1: Messrohr
- 2: Messgerät
- 3: Messmedium
- 4: Mikro-Verwirbelung
- 10: Erhebung

## Patentansprüche

1. Messrohr (1), insbesondere für ein Messgerät (2) der Prozess- und Automatisierungstechnik,
wobei das Messrohr (1) zum Führen eines Messmediums (3) geeignet ist,
**dadurch gekennzeichnet,**
**dass** das Messrohr (1) an der dem Messmedium (3) zugewandten Seite in Längsrichtung eine Vorrichtung (10) aufweist, die geeignet ist, das Ablagern von Substanzen aus dem Messmedium (3) zu verhindern oder zumindest zu erschweren, wobei diese Vorrichtung (10) als wenigstens eine nach Innen gerichtete spiralförmig verlaufende Erhebung ausgebildet ist.

2. Messrohr nach Anspruch 1,
**dadurch gekennzeichnet, dass** die spiralförmig verlaufende Erhebung (10) wenigstens eine Umdrehung von einem Zehntel aufweist.

3. Messrohr nach einem der vorhergehenden Ansprüche,
**dadurch gekennzeichnet, dass** die spiralförmig verlaufende Erhebung (10) wenigstens eine Unterbrechung aufweist.

4. Messrohr nach einem der vorhergehenden Ansprüche,
**dadurch gekennzeichnet, dass** das Messrohr (1) mehrere spiralförmig verlaufende Erhebungen (10) aufweist, die jeweils parallel zueinander verlaufen.

5. Messrohr nach einem der vorhergehenden Ansprüche,
**dadurch gekennzeichnet, dass** das Messrohr (1) aus einem nicht leitenden Werkstoff besteht, insbesondere aus einem thermoplastischen, duroplastischen oder elastomeren Kunststoff.

6. Messrohr nach Anspruch 5,
**dadurch gekennzeichnet, dass** das Messrohr (1) innenseitig mit PFA, PTFE oder PEEK ausgekleidet oder beschichtet ist.

7. Messrohr nach einem der vorhergehenden Ansprüche,
**dadurch gekennzeichnet, dass** der Übergang von der Erhebung zur Innenseite des Messrohrs derart ausgestaltet ist, dass sich partiell um die Erhebung herum Mikro-Verwirbelungen (4) bilden.

8. Messrohr nach einem der vorhergehenden Ansprüche,
**dadurch gekennzeichnet, dass** das Messrohr (1) hygienischen Ansprüchen genügt, insbesondere Totraum- und Spaltfreiheit aufweist.

9. Messgerät (2) der Prozess- und Automatisierungstechnik mit einem Messrohr (1),
**dadurch gekennzeichnet,**
**dass** das Messrohr (1) nach einem der vorherigen Ansprüche ausgebildet ist.

10. Messgerät nach Anspruch 9,
**dadurch gekennzeichnet, dass** das das Messgerät (2) als Durchflussmessgerät, insbesondere als magnetisch-induktives Durchflussmessgerät ausgeführt ist.

11. Messgerät nach Anspruch 9 oder 10,
**dadurch gekennzeichnet, dass** das Messgerät (2) hygienischen Ansprüchen genügt, insbesondere Totraum- und Spaltfreiheit aufweist.
